# FASCICULE DE BREVET EUROPEEN

(11) **EP 1 611 064 B1**
(45) Date de publication et mention de la délivrance du brevet: **16.04.2008**
(21) Numéro de dépôt: 04742326.4
(22) Date de dépôt: 24.03.2004
(51) Int. Cl.: C03B 23/035

(54) **PROCEDE ET DISPOSITIF DE BOMBAGE DE FEUILLES DE VERRE PAR PRESSAGE ET ASPIRATION**
VERFAHREN ZUM BIEGEN VON GLASSCHEIBEN DURCH PRESSEN UND SAUGEN
METHOD FOR CROWNING SHEETS OF GLASS BY PRESSING AND SUCTION

(30) Priorité: 26.03.2003 FR 0303686
(43) Date de publication de la demande: 04.01.2006
(73) Titulaire: SAINT-GOBAIN GLASS FRANCE, 92400 Courbevoie (FR)
(72) Inventeur: Thellier, Hervé, F-60170 Pimprez (FR); Machura, Christophe, F-60150 Chevincourt (FR); Garnier, Gilles, F-60420 Dompierre (FR)
(74) Mandataire: Colombier, Christian
(86) Numéro de dépôt international: PCT/FR2004/000716
(87) Numéro de publication internationale: WO 2004/087590

(56) Documents cités:
- EP-A- 0 706 978
- FR-A- 2 672 585
- US-A- 6 044 662
- US-A- 6 138 477

## Description

La présente invention porte sur un procédé de bombage dans une cellule de bombage d'une feuille de verre ou d'un empilement de feuilles de verre superposées.

Les feuilles à bomber, chauffées à la température de bombage dans un four horizontal qu'elles traversent véhiculées par un convoyeur sont amenées par le convoyeur dans la cellule de bombage dans laquelle est disposée une forme mâle pleine convexe en direction de laquelle la feuille de verre est déplacée verticalement au moyen d'une contreforme femelle annulaire concave, pour être pressée entre la forme mâle et la forme femelle.

Les feuilles de verre bombées obtenues sont notamment destinées à constituer des vitrages d'automobiles, en particulier des pare-brises, ces vitrages étant, dans la plupart des cas, des vitrages feuilletés, c'est-à-dire constitués par au moins deux feuilles de verre disposées l'une sur l'autre avec interposition entre elles d'une feuille d'une matière plastique telle que le poly(vinyl butyral) (PVB).

Les formes bombées pour les vitrages d'automobiles sont très demandées, le bombage étant en première approche défini par un premier rayon de courbure d'une ligne selon une direction du vitrage et par un second rayon de courbure d'une ligne selon une autre direction du vitrage, cette seconde ligne étant orthogonale à la première ligne. On peut indiquer, d'une manière générale, un premier rayon de courbure de 1 mètre à l'infini et un second rayon de courbure de 5 mètres à l'infini. Des courbures de plus en plus prononcées sont demandées maintenant au moins selon l'une des deux dimensions de la feuille.

Dans le cas où l'on fabrique des vitrages simples, les feuilles de verre devant être bombées sont introduites individuellement dans la cellule de bombage.

Dans le cas où l'on fabrique des vitrages feuilletés, on superpose autant de feuilles de verre que doit en comporter le vitrage feuilleté (en général deux feuilles) avec interposition d'un agent de séparation, tel que de la poudre de carbonate de calcium ou de Kieselguhr, et on introduit cet empilement à l'entrée du four. Ceci permet d'obtenir une parfaite complémentarité des formes dans le cas de feuilles de verre destinées à être associées dans un même vitrage feuilleté. Les feuilles bombées ainsi obtenues sont, après refroidissement, séparées manuellement en vue de leur assemblage par les feuilles intermédiaires de matière plastique de type PVB (polyvinylbutyral).

Les constructeurs automobile demandent la réalisation de vitrages aux formes complexes, présentant notamment de forts critères de développabilité, et ce avec un très bon respect de la géométrie, c'est-à-dire s'écartant très peu (moins de 2 mm, voir moins de 1 mm d'écart) de la forme souhaitée. De plus, le vitrage doit présenter le moins de marques possibles provenant des outils de bombage, surtout dans la partie centrale. Enfin, lorsque le vitrage comprend au moins une couche comme une couche anti-solaire du type couche comprenant de l'argent, le procédé de bombage ne doit pas endommager la ou les couche(s).

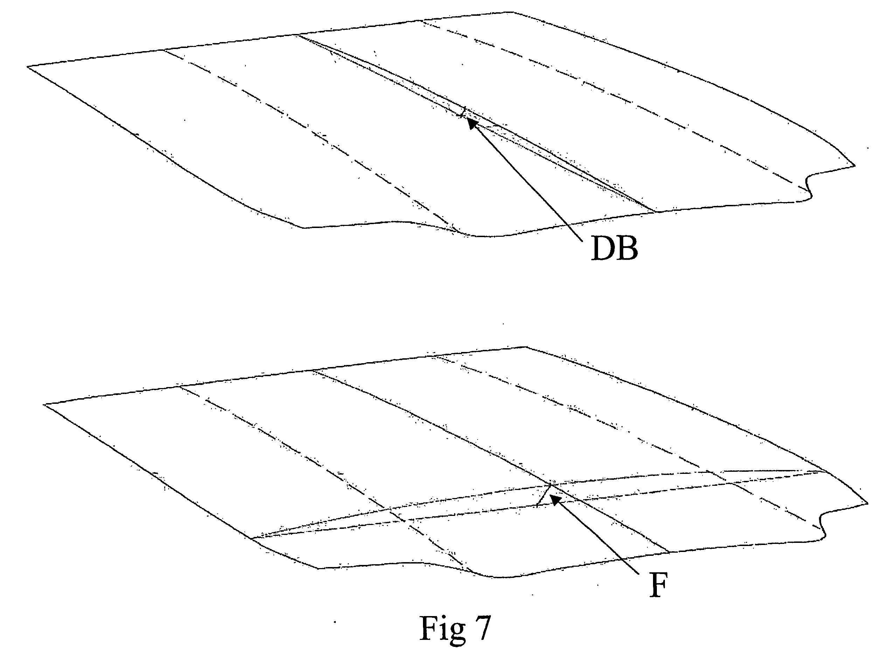

Dans ce qui suit, on désigne par « flèche », la profondeur de bombage de l'arc le plus long, correspondant généralement au bombage le plus prononcé, ce qui correspond au segment ayant pour extrémités le milieu dudit arc et le milieu de la corde qui lui correspond (voir notamment la flèche F telle que représentée par la figure 7). Le bombage secondaire, appelé double-bombage (« cross-bending » ou « cross-curvature » en anglais), est perpendiculaire au premier, et est généralement moins prononcé que le premier. On appel également « double-bombage » la profondeur de ce bombage secondaire formé par l'arc perpendiculaire à l'arc le plus long et qui correspond au segment ayant pour extrémités le milieu dudit arc et le milieu de la corde qui lui correspond. (voir notamment le double-bombage DB tel que représenté par la figure 7) .

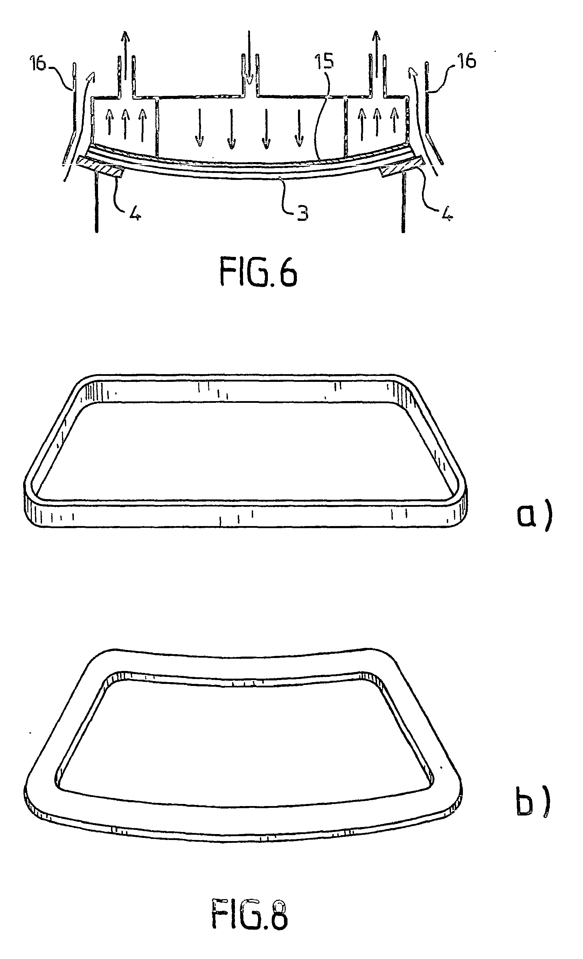

On entend par «squelette», une fine bande de métal refermée sur elle-même en formant un support sur la tranche supérieure duquel est posée une feuille de verre (voir figure 8a). La tranche a généralement une épaisseur allant de 0,1 à 1 cm. Dans le cadre de la présente demande, un squelette supporte une feuille de verre de sorte que la tranche de la feuille de verre est éloignée d'au moins 2 cm et généralement éloigné de 2 à 10 cm dudit squelette. De la sorte, on évite l'effet d'effondrement en forme de baignoire que l'on aurait si le support venait trop près du bord du verre.

On entend par cadre une bande se refermant également sur elle-même mais offrant comme support non pas sa tranche mais l'une de ses grandes surfaces (voir figure 8b) dont la largeur est généralement comprise entre 1 et 4 cm. En général un cadre supporte une feuille de verre en la supportant à sa périphérie, y compris sous la tranche de ladite feuille.

Dans le cadre de la présente demande, le terme vitrage peut recouvrir une feuille de verre individuelle ou une pluralité de feuilles de verre superposées.

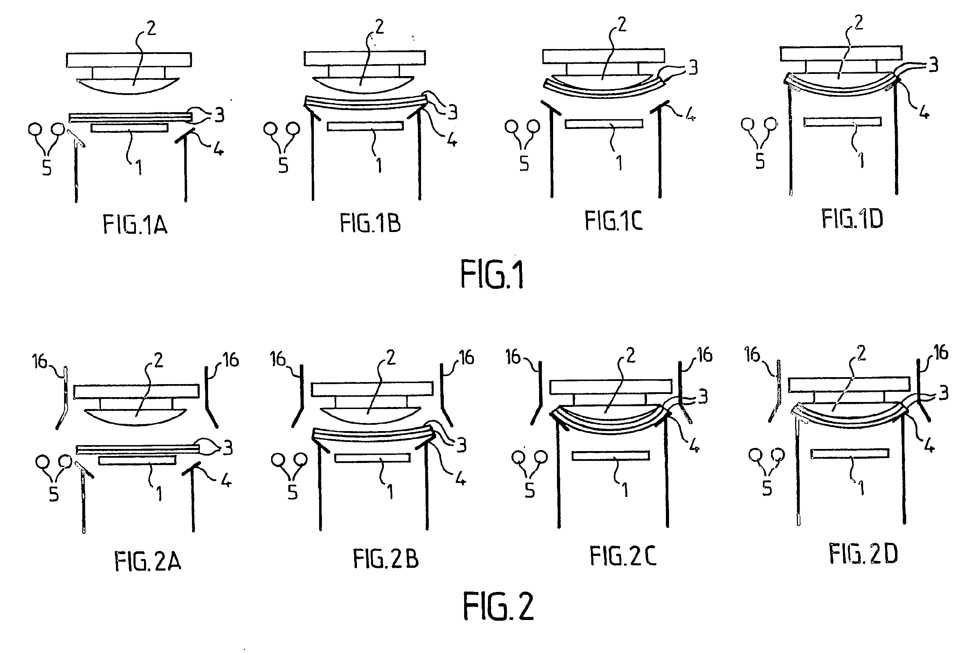

Le WO 95/01938 décrit un procédé de bombage dans une cellule de bombage renfermant, comme on peut le voir sur la Figure 1 du dessin annexé :
- un organe de soutien constitué par un coussin d'air chaud 1 ;
- en position haute, la forme mâle convexe 2, munie de moyens propres à maintenir à son contact une feuille de verre ou plusieurs feuilles de verre superposées 3 (deux de ces feuilles étant représentées sur la Figure 1) ; et
- en position basse, la contreforme annulaire concave 4, apte à être déplacée entre une position basse sous le plan de convoyage des feuilles de verre 3 et une position haute au voisinage de la forme mâle 2. Cette contreforme 4, désignée également dans la présente description comme étant un « cadre », est une structure métallique qui offre une surface de contact avec la feuille de verre 3 plus importante qu'un simple contact linéaire (cas d'un squelette).

Selon le procédé du WO 95/01938 les feuilles 3 sont amenées par les rouleaux 5, et pénètrent dans la cellule de bombage où elles sont prises en charge par le coussin d'air chaud 1 (fig 1A). Dès que le verre 3 est correctement focalisé, le cadre annulaire 4 est soulevé. Pendant cette montée, le verre 3 s'effondre par gravité sur le cadre annulaire 4 sous l'effet de la gravité (Fig 1B). Dès que le cadre annulaire 4 a achevé sa montée et qu'une ébauche est ainsi constituée, la feuille de verre 3 ou l'empilement de feuilles de verre 3 serait aspiré par une aspiration. De ce fait, le verre 3 devrait décoller totalement du cadre annulaire 4 et venir se plaquer contre la surface convexe de la forme mâle 2 (Fig 1C). La dernière étape de ce procédé de bombage connu est un pressage entre la forme mâle 2 et le cadre annulaire 4 de la feuille de verre 3 ou de l'empilement de feuilles de verre 3. Ce pressage ne constitue qu'une étape de finition pour parfaire la géométrie des bords, sans créer de contraintes de compression en vue de compenser l'excédent de matière (Fig 1D).

Il est apparu que ce procédé connu ne permet pas d'obtenir des feuilles fortement bombées, surtout lorsque plusieurs feuilles sont empilées car, pour des courbures importantes, il n'est plus possible d'éviter les ondulations de bords de la feuille de verre, avec les défauts optiques associés. C'est le cas notamment pour les formes de vitrage qui présentent un critère de non-développabilité localement supérieur à 2 (surtout dans le cas de plusieurs feuilles superposées), ledit critère de non-développabilité étant défini par la formule D = Ln (10⁷/R₁ x R₂) où Ln désigne le logarithme népérien, R₁ et R₂ étant égaux aux rayons de courbure principaux au point considéré, exprimés en millimètres. De plus, il est apparu que dans le cas ou plusieurs feuilles étaient empilées (en vu de réaliser un vitrage feuilleté), toutes les feuilles ne pouvaient pas être correctement aspirées et venaient à se séparer lors de l'étape d'aspiration. En effet, la ou les feuilles qui ne viennent pas en contact avec la forme mâle risquent fort de ne pas suivre la feuille qui vient en contact avec ladite forme, ce qui conduit à des perturbations nécessitant des arrêts de la chaîne de fabrication.

Egalement, ce procédé connu nécessite des volumes d'air importants, lors de la phase d'aspiration (Fig 1C) d'une part, et en raison de l'utilisation d'un coussin d'air d'autre part. On doit noter par ailleurs que l'on ne peut pas utiliser le coussin d'air pour pousser le verre vers la forme supérieure convexe. En effet, le coussin d'air sert exclusivement au maintien des feuilles à une distance fixe (généralement de 2 à 6 mm) d'une pièce soufflant l'air dudit coussin.

La présente invention a pour but de remédier à ces inconvénients. Notamment, le procédé selon l'invention est un procédé de bombage de courte durée, pouvant exercer de fortes concavités, à la fois pour donner de la flèche et du double-bombage, plus particulièrement pour des feuilles superposées, et avec un minimum ou une absence de marques, et de plus ne nécessite pas la circulation d'importants volumes d'air.

Il a en effet été découvert qu'en pratiquant d'abord un effondrement, de préférence de type principalement cylindrique ayant de préférence créé une flèche sensiblement égale à la flèche finale (ou flèche imposée par la forme convexe mâle), suivi d'un pressage du contour du vitrage imposant d'abord la forme périphérique de la feuille de verre (ou de l'empilement de feuilles de verre), puis en aspirant la partie centrale du verre tout en maintenant le pressage périphérique, on assurait lors de ladite aspiration un fluage du verre apte à compenser en épaisseur les efforts des deux bombages selon des concavités orthogonales, et ce pour des rayons pouvant atteindre de faibles valeurs (ce qui correspond à de fortes courbures), telles que 80 à 200 mm, par exemple environ 100mm. Juste avant que le pressage du contour de la feuille ne commence, la partie centrale du vitrage vient en contact avec la partie en regard de la forme mâle. On aurait pu penser qu'un formage seul de la périphérie de la feuille serait suffisant pour conférer au vitrage sa forme souhaitée. Cependant, il est apparu que lors du pressage de la périphérie du vitrage, des défauts se formaient dans la partie centrale du vitrage du fait d'une partielle perte de contact avec la forme mâle en cet endroit (formation de « poches » ou « bulles »). L'aspiration remédie à ce problème en imposant au vitrage un contact parfait avec la forme mâle. De la sorte, on donne au vitrage très sensiblement la géométrie de la forme convexe. On peut ainsi fabriquer un vitrage respectant une très faible tolérance de fabrication, c'est-à-dire dont la géométrie s'écarte très peu (moins de 2 mm d'écart voire moins de 1 mm d'écart) de la forme souhaitée.

Par ailleurs, dans le cas où un empilement de plusieurs feuilles de verre est soumis au procédé de bombage de l'invention, le pressage du contour resserre les bords des feuilles de verre en regard, allant même jusqu'à assurer un bouchage étanche de l'espace entre lesdites feuilles à la périphérie. De ce fait, la force d'aspiration de la première feuille - celle destinée à venir s'appliquer contre la forme mâle - est communiquée à la seconde feuille, et ainsi de suite. On apporte ainsi une solution au problème de la mauvaise aspiration de la ou des feuille(s) plus éloignée(s) de la forme mâle dans le cas du bombage d'un empilement de feuilles de verre en vue de la fabrication de vitrages feuilletés. Ainsi, le pressage a un effet double: il assure tout d'abord l'étanchéité périphérique entre la feuille directement en contact avec la forme mâle, mais aussi, il assure également l'étanchéité périphérique entre les différentes feuilles de verre. C'est pourquoi l'aspiration peut provoquer une force venant plaquer ensemble toutes les feuilles vers la forme mâle, la force d'aspiration étant en quelque sorte communiquée d'une feuille à l'autre. La formation de bulles ou poches est ainsi non seulement évitée entre la forme mâle et la feuille de verre la touchant, mais aussi entre les différentes feuilles. De la sortes toutes les feuilles de verre ont rigoureusement la même forme, laquelle est très conforme à celle souhaitée.

Selon l'invention, on préfère ne pas déclencher l'aspiration avant que la première feuille de verre ne vienne en contact avec la forme convexe mâle. En effet, une telle aspiration prématurée ne sert à rien et il n'est pas judicieux de procéder à des aspirations inutiles. De plus, cela provoque des circulations gazeuses que l'on souhaite en général réduire au minimum dans la cellule de bombage.

La présente invention a donc d'abord pour objet un procédé de bombage d'au moins une feuille de verre (une feuille de verre ou un empilement de feuilles de verre) par formage de ladite feuille ou dudit empilement entre une forme mâle pleine convexe et une contreforme ou cadre femelle annulaire concave, ladite forme mâle étant disposée au-dessus de ladite contreforme femelle avec possibilité de déplacement vertical de l'une par rapport à l'autre dans une cellule de bombage dans laquelle est de préférence maintenue une température ambiante identique ou sensiblement identique à la température de bombage, la feuille de verre ou l'empilement de feuilles de verre, chauffé(e) à la température de bombage dans un four horizontal qu'il ou elle traverse, véhiculé(e) par un convoyeur, étant conduit(e) au formage après avoir subi un effondrement par gravité, caractérisé par le fait qu'on effectue un effondrement par gravité de préférence dans des conditions conduisant à ou conduisant essentiellement à une flèche f sensiblement égale à la flèche finale et que, pour le formage, on met tout d'abord en contact la région centrale de ladite feuille (3) ou dudit empilement de feuilles (3) avec la forme mâle (2) puis on effectue une phase de pressage de ladite feuille (3) ou dudit empilement de feuilles (3) dans sa région périphérique entre la forme mâle (2) et la contreforme femelle, puis une phase d'application par aspiration de ladite feuille ou dudit empilement de feuilles contre la forme mâle, avec maintien du pressage.

Par l'expression « conduisant ou conduisant essentiellement à une flèche f », on entend qu'il se forme une flèche f suivant une direction de la surface de la feuille, un double-bombage pouvant toutefois également se former suivant l'autre direction mais de valeur sensiblement inférieure à la valeur du double-bombage imposée lors du pressage.

Ainsi, l'invention concerne un procédé de bombage simultané de plusieurs feuilles de verre superposées (3) comprenant
**■** une étape d'effondrement par gravité du verre, puis,
**■** une mise en contact de la région centrale desdites feuilles (3) avec une forme mâle (2) par rapprochement de ladite forme mâle d'une contreforme femelle (4) supportant lesdites feuilles, ladite forme mâle (2) étant disposée au-dessus de ladite contreforme femelle (4) avec possibilité de déplacement vertical l'une par rapport à l'autre dans une cellule de bombage (12),
**■** puis une phase de pressage du verre dans sa région périphérique entre la forme mâle (2) et la contreforme femelle (4), puis
**■** une phase d'aspiration du verre au travers de la forme mâle (2), le pressage étant maintenu, ladite aspiration n'étant pas déclenchée avant que la première feuille ne vienne en contact avec la forme mâle, puis
**■** l'arrêt du pressage par écartement de la forme mâle de la contreforme femelle, le verre restant en contact avec la forme mâle sous l'effet d'une force d'aspiration au moins partiellement exercée par une jupe entourant la forme mâle, puis
**■** pendant que le verre est en contact avec la forme mâle sous l'effet de la force d'aspiration, un support de refroidissement est amené sous le verre, puis la force d'aspiration est stoppée de façon à laisser reposer le verre sur ledit support de refroidissement, puis ledit support de refroidissement emmène le verre pour une étape de refroidissement du verre en dehors de la cellule de bombage.

Selon le procédé de l'invention, on conduit un effondrement pouvant conduire à une flèche f de 20 mm à 400 mm pour une flèche finale de 20 mm à 490 mm. Cet effondrement est de préférence de type principalement cylindrique. Le qualificatif « cylindrique » ne signifie pas que la forme obtenue est exactement cylindrique, elle signifie surtout que l'on obtient une concavité principalement dans une direction, comme pour un cylindre. Ici, l'effondrement est de type principalement cylindrique, c'est-à-dire qu'une concavité plus prononcée est obtenue dans une première direction pour créer la flèche, et qu'une concavité moins prononcée est obtenue dans la direction perpendiculaire à la première direction (double-bombage). La flèche intermédiaire f créée par cet effondrement dans la direction principale correspondant à la plus forte concavité, représente de préférence 80 à 100% de la flèche imposée par la forme convexe mâle. Le double-bombage créé par cet effondrement dans la direction secondaire correspondant à la moins forte concavité va de 10 à 150 mm, et représente de préférence 10 à 50 % du double-bombage final. Cette étape d'effondrement est relativement courte et peut durer dans le cas de deux feuilles superposées de 2 à 10 min. Un temps aussi court est très favorable pour préserver l'intégrité d'une éventuelle couche anti-solaire comprenant de l'argent. Un temps d'effondrement court est également favorable pour limiter le marquage du vitrage par l'outil qui le soutien pendant cet effondrement, surtout si un squelette est utilisé. Le temps d'effondrement court se traduit par un effondrement principalement du type cylindrique. Si l'effondrement était plus long, il aurait un caractère plus sphérique (double-bombage de plus forte valeur). Le support d'effondrement a bien entendu la forme menant à l'effondrement cylindrique souhaité, c'est-à-dire que les cotés les plus longs du support sont suffisamment incurvés pour laisser les deux bord les plus longs du vitrage s'affaisser suffisamment.

Conformément à un premier mode de réalisation de la présent invention, on amène la feuille de verre ou l'empilement de feuilles de verre à la cellule de bombage à l'état plat sur un convoyeur constitué par un lit plan de rouleaux cylindriques, la feuille de verre ou l'empilement de feuilles de verre pénétrant dans la cellule de bombage pour s'immobiliser sur un moyen de supportage de sa partie centrale, ledit moyen étant entouré par la contreforme annulaire, la phase d'effondrement étant alors conduite entièrement dans la cellule de bombage suite au soulèvement de la contreforme annulaire recevant la feuille ou l'empilement de feuilles, ce qui permet à l'effondrement de se réaliser sur ladite contreforme. Selon ce premier mode de réalisation, la contreforme annulaire fait office de support d'effondrement puis de moyen de pressage. Elle peut ne pas être revêtue d'un matériau fibreux du type feutre ou tricot, mais cela n'est cependant pas exclu.

Selon une variante de ce premier mode de réalisation, on amène la feuille de verre à la cellule de bombage sur un lit de conformation placé dans un four tunnel, ledit lit étant constitué par des tiges conformatrices (rouleaux ayant une forme creuse, parfois appelés « guidons ») afin de conférer progressivement par effondrement une ébauche de forme bombée à la ou aux feuille(s), la feuille de verre ou l'empilement de feuilles de verre pénétrant ensuite dans la cellule de bombage pour s'immobiliser sur un moyen de supportage de sa partie centrale, ledit moyen étant entouré par la contreforme annulaire, la phase d'effondrement étant alors poursuivie dans la cellule de bombage suite au soulèvement de la contreforme annulaire recevant la feuille ou l'empilement de feuilles , ce qui permet à l'effondrement de se poursuivre sur ladite contreforme. Le moyen de supportage précité est ici généralement un coussin d'air.

Conformément à un second mode de réalisation, particulièrement préféré, on conduit l'effondrement de la feuille de verre ou de l'empilement de feuilles de verre au moins partiellement au cours de son transport dans un four tunnel menant à la cellule de bombage dans laquelle est effectuée l'étape de pressage, ledit effondrement s'effectuant au moins partiellement sur un support d'effondrement lui-même transporté sur un chariot convoyeur traversant le four tunnel et s'immobilisant dans la cellule de bombage au dessus d'un moyen mobile verticalement, ledit moyen étant entouré par la contreforme annulaire, des moyens étant prévus pour évacuer le chariot portant ledit support une fois celui-ci immobilisé, et des moyens étant prévus pour évacuer le support d'effondrement une fois la feuille de verre ou l'empilement de feuilles de verre repris(e) à sa périphérie par la contreforme annulaire.

Lorsque le support d'effondrement est immobilisé dans la cellule de bombage, ledit support occupe une surface s'inscrivant entièrement (vu de dessus) à l'intérieur de la contreforme annulaire, de façon à ce que ledit support puisse passer à travers cette dernière lorsque ladite contreforme annulaire se soulève en direction de la forme mâle, entraînant au passage la feuille ou l'empilement de feuilles.

Le support d'effondrement peut être une surface pleine, ou perforée ou ajourée ou un cadre, mais est avantageusement un squelette sur la tranche supérieure duquel sera posée la feuille de verre 3 (ou l'empilement de feuilles de verre 3) à transporter. Le support d'effondrement est de préférence revêtu d'un matériau fibreux comme un feutre ou tissu ou tricot résistant aux températures de bombage (généralement en métal réfractaire ou céramique). On peut utiliser différentes variantes de « squelettes » , notamment en fonction de l'importance de la flèche. Pour les flèches de plus faible valeur (comme par exemple inférieures à 200 mm) on peut généralement utiliser un squelette fixe (c'est-à-dire non-articulé). Pour les flèches de plus forte valeur (comme par exemple supérieures à 200 mm) on peut généralement également utiliser un squelette articulé notamment du type de celui décrit dans EP 448447 A. Dans ce mode de réalisation, la contreforme annulaire peut ne pas être revêtue d'un matériau fibreux comme un feutre ou tissu ou tricot résistant aux températures de bombage (généralement en métal réfractaire ou céramique) mais un tel revêtement est également possible.

Le moyen mobile verticalement est avantageusement constitué par une colonne verticale susceptible de monter et descendre dans la cellule de bombage.

Conformément à des modes de réalisation particuliers du procédé selon la présente invention:
- on effectue le pressage pendant 0,1 à 10 secondes ;
- on obtient l'aspiration par une dépression créée au travers de la forme mâle ;
- on effectue l'aspiration sous pressage;
- après l'aspiration avec maintien du pressage, on poursuit le procédé en supprimant le pressage tout en maintenant une aspiration, de préférence également au moyen d'une jupe autour de la forme mâle, le temps de reprendre la feuille bombée ou l'empilement de feuilles bombées sur un support de refroidissement comme un squelette de refroidissement ou de préférence un cadre de refroidissement;
- on conduit le bombage à une température inférieure ou égale à 640°C, notamment à une température de 590 à 630°C ;
- dans le cas d'un empilement de feuilles de verre pour obtenir un vitrage feuilleté, on superpose plusieurs feuilles de verre avec interposition en périphérie d'une poudre de séparation telle que du carbonate de calcium ou du Kieselguhr.

Dans le cas de deux feuilles de verre superposées, entre le moment ou les feuilles sont posées sur le support d'effondrement et le moment ou les feuilles quittent la cellule de bombage, s'écoulent généralement entre 2 min 10 sec et 8 min.

Dans le cadre de l'invention, pendant l'écartement de la forme mâle de la contreforme femelle, le verre reste en contact avec la forme mâle sous l'effet d'une force d'aspiration.

L'aspiration exercée au travers de la forme convexe mâle, peut être réalisée au travers de toute sa surface. De préférence, l'aspiration est réalisée dans une région périphérique entourant une autre région plus centrale dans laquelle un soufflage est exercé. Dans ce cas, la force d'aspiration est plus forte que la force de soufflage, de sorte que globalement c'est une aspiration qui est exercée sur la feuille supérieure. Lorsqu'un soufflage est réalisé dans la zone centrale, la forme convexe mâle est munie d'un matériau fibreux (feutre, tricot ou autre) permettant à l'air de circuler latéralement dans ledit matériau fibreux, c'est-à-dire parallèlement à la surface de contact. Ainsi, le soufflage est suffisamment modéré pour qu'il n'y ait pas de perte de contact entre la feuille de verre supérieure et la forme convexe mâle revêtue. Ce léger soufflage produit un très mince coussin d'air réduisant la pression de contact entre la feuille supérieure et la forme convexe mâle muni de son matériau fibreux, ce qui réduit encore le risque de marquage du verre en raison du contact.

De préférence également, une jupe entoure la forme convexe mâle de façon à pouvoir également exercer une aspiration extérieurement au vitrage et à proximité de la (des) tranche(s) de la (des) feuille(s) de verre. Globalement, l'aspiration totale exercée (addition des aspiration exercées au travers de la forme convexe d'une part, et à travers la jupe d'autre part) est suffisante pour que les feuilles de verre restent en contact avec la forme mâle lorsque la contreforme femelle est enlevée et ne touche plus le verre après la phase de pressage. Pendant la phase de pressage, l'aspiration par la jupe n'est pas indispensable car le verre est maintenu par la contreforme femelle. L'aspiration par la jupe est surtout nécessaire lorsque plusieurs feuilles de verre sont superposées et que la contreforme femelle est abaissée, afin de maintenir tout l'empilement de feuille de verre en contact avec la forme mâle. Cependant, en pratique, on peut aussi actionner simultanément toutes les aspirations (par la jupe d'une part et au travers de la forme mâle d'autre part).

Ainsi, lorsque plusieurs feuilles de verre sont superposées et simultanément bombées, pendant l'écartement de la forme mâle de la contreforme femelle, le verre reste en contact avec la forme mâle sous l'effet d'une force d'aspiration de préférence au moins partiellement exercée par une jupe entourant la forme mâle.

Ensuite, pendant que le verre est en contact avec la forme mâle sous l'effet d'une force d'aspiration, un support de refroidissement est amené sous le verre, puis la force d'aspiration est stoppé de façon à laisser reposer le verre sur ledit support de refroidissement, puis ledit support de refroidissement emmène le verre pour l'étape de refroidissement.

La présente invention a également pour objet l'application du procédé tel que défini ci-dessus à la réalisation de vitrages présentant localement un critère de non-développabilité supérieur à 2, voire supérieur à 3, voire supérieur à 4. Les vitrages aux forts critères de non-développabilité pouvant être supérieurs à 3 voire supérieurs à 4 sont notamment les lunettes arrières de véhicules automobile (comprenant généralement une seule feuille de verre trempé) et les vitrages aux moins forts critères de non-développabilité pouvant être cependant supérieurs à 2 voire supérieurs à 3 et souvent compris entre 2 et 3 sont notamment les pare-brises feuilletés (comprenant généralement deux feuilles de verre) de véhicule automobile.

Enfin, la présente invention a pour objet un dispositif de bombage pour la mise en oeuvre du procédé tel que défini ci-dessus avec référence au second mode de réalisation, caractérisé par le fait qu'il comprend:
- un four, comprenant généralement notamment une partie horizontale;
- dans le four, un dispositif de transport du verre (de la
ou des feuilles de verre), placé sur un support d'effondrement notamment du type squelette, pouvant être porté sur un chariot ;
- une cellule de bombage comprenant un four de bombage, comportant un moyen de réception et d'immobilisation des supports d'effondrement portant le verre transportés par ledit dispositif de transport, un cadre ou contreforme femelle annulaire entourant ledit moyen de réception/immobilisation et une forme mâle convexe disposée au-dessus de la contreforme annulaire, des moyens étant prévus pour évacuer les chariots à partir de la cellule de bombage, des moyens étant prévus pour évacuer les supports d'effondrement à partir de la cellule de bombage, des moyens étant prévus pour déplacer verticalement d'une part la contreforme annulaire et, d'autre part, le moyen de réception et d'immobilisation des supports d'effondrement et pour en contrôler la vitesse de déplacement. Ces derniers moyens peuvent être des vis motorisées, disposées hors de l'enceinte isolée thermiquement.

Ainsi, selon l'invention, on a un dispositif de bombage pour la mise en oeuvre du procédé selon l'invention comprenant un four à l'intérieur duquel se trouve un dispositif de transport du verre placé sur squelette amenant le(s) squelette(s) à une cellule de bombage, ladite cellule comprenant un cadre ou contreforme femelle annulaire, le squelette occupant une surface s'inscrivant entièrement ,vu de dessus, à l'intérieur de la contreforme annulaire, et une forme mâle convexe disposée au-dessus de la contreforme annulaire, des moyens étant prévus pour évacuer le(s) squelette(s) à partir de la cellule de bombage, des moyens étant prévus pour déplacer verticalement d'une part la contreforme annulaire, ladite forme mâle étant muni de moyens pouvant exercer une aspiration au travers de sa surface convexe.

Pour mieux illustrer le procédé de la présente invention, on va maintenant en décrire, à titre indicatif et non limitatif, plusieurs modes de réalisation particuliers, avec référence au dessin annexé sur lequel:
- la Figure 1 est une vue schématique de côté des différentes étapes (Figures 1A à 1D) d'un procédé de formage d'un empilement de deux feuilles de verre, tel que décrit dans WO 95/011938 ;
- la Figure 2 est une vue analogue à la Figure 1, montrant les différentes étapes (Figures 2A à 2D) d'un procédé de formage selon un premier mode de réalisation de l'invention ;
- la Figure 3 est une vue schématique de dessus de l'intérieur d'un four d'amenée d'un vitrage à une cellule de bombage, selon un second mode de réalisation de la présente invention ;
- la Figure 4 est une vue schématique selon IV-IV de la Figure 3 ;
- la Figure 5 illustre les différentes étapes (Figures 5A à 5G) de ce second mode de réalisation ;
- La figure 6 illustre la phase d'aspiration sous pressage de ce second mode de réalisation.
- la Figure 7 illustre sur un pare-brise automobile vu en perspective ce que l'on appelle flèche et double-bombage La flèche F et le double-bombage DB sont représentés sur un pare-brise automobile vu en perspective de son côté convexe. ; et
- la Figure 8 illustre ce que l'on appelle squelette (fig 8a) et cadre (fig 8b).

On décrit maintenant le premier mode de réalisation du procédé selon la présente invention avec référence aux Figures 2A à 2D, sur lesquelles on a illustré, à titre d'exemple, le bombage d'un empilement de deux feuilles de verre destinées à constituer un pare-brise feuilleté. Il va de soi qu'une seule feuille de verre pourrait être soumise au bombage.

### Figure 2A : Amenée des feuilles de verre

Les feuilles de verre 3 sont chauffées à la température de bombage dans un four horizontal (ou « tunnel ») qu'elles traversent, véhiculées par un convoyeur plan à rouleaux 5, qui les conduit dans une cellule de bombage identique à celle décrite avec référence à la Figure 1. Dans ce cas, les feuilles 3 sont planes comme illustré sur la Figure 2A. Dans la cellule de bombage, les feuilles 3 sont reprises par un coussin d'air 1, de la même façon que dans le WO 95/01938.

### Figure 2B : Effondrement

L'effondrement par gravité des feuilles 3 est réalisé de la même façon que dans le WO 95/01938, avec la particularité cependant qu'il est suffisamment court pour être principalement cylindrique et présenter une flèche intermédiaire f sensiblement égale à la flèche finale (cf. Figure 2C). Pour obtenir la flèche intermédiaire f souhaitée, on peut jouer sur différents paramètres comme cela est bien connu de l'homme du métier, ces paramètres étant la température et le temps de séjour.

### Figure 2C: Pressage

Après l'effondrement du verre sur le cadre annulaire 4, ce dernier est amené à poursuivre sa montée vers la face supérieure convexe de la forme mâle 2 afin de réaliser le pressage de la périphérie des feuilles de verre 3.

### Figure 2D : Aspiration

Tout en maintenant le pressage, les feuilles de verre 3 sont aspirées par une dépression créée au travers de la forme mâle. Cette aspiration doit être suffisante pour que la feuille de verre supérieure 3 soit en contact sur toute sa surface contre la forme supérieure convexe pleine 2. Avant contact du verre avec la forme mâle supérieure, il n'y a pas de décollement du cadre annulaire 4.

A la suite de l'opération d'aspiration, comme précédemment, les feuilles de verre 3 sont maintenues au contact de la forme mâle 2 grâce à l'aspiration , notamment l'aspiration additionnelle par la jupe 16 et La feuille inférieure 3 ne peut pas se détacher de la feuille supérieure 3 du simple fait de l'abaissement de la contreforme 4. Pendant ou après l'abaissement du cadre 4 sous le plan de convoyage du verre plan, on introduit sous la forme mâle un support de refroidissement, notamment un cadre de refroidissement pour récupérer le verre bombé.

Dès que l'aspiration est arrêtée, les feuilles bombées 3 tombent sur ledit support de refroidissement qui se situe lui-même sur un convoyeur afin d'évacuer les feuilles bombées à la station de refroidissement. Le refroidissement peut être une trempe (surtout pour une feuille simple) ou être un refroidissement naturel, ce qui est le cas des pare-brise feuilletés (au moins deux feuilles superposées).

Dans le procédé qui vient d'être décrit avec référence à la Figure 2, les modes de réalisation de l'amenée du verre (Fig. 2A) et de l'effondrement (Fig. 2B) ne sont toutefois pas des modes de réalisation préférés, bien qu'ils ne soient pas exclus dans la présente invention. En effet, sachant qu'il faut préférentiellement, conformément à la présente invention, réaliser un effondrement principalement cylindrique conduisant à une flèche f sensiblement égale à la flèche finale, il faut, si l'on part d'un verre plat, le chauffer de manière suffisante.

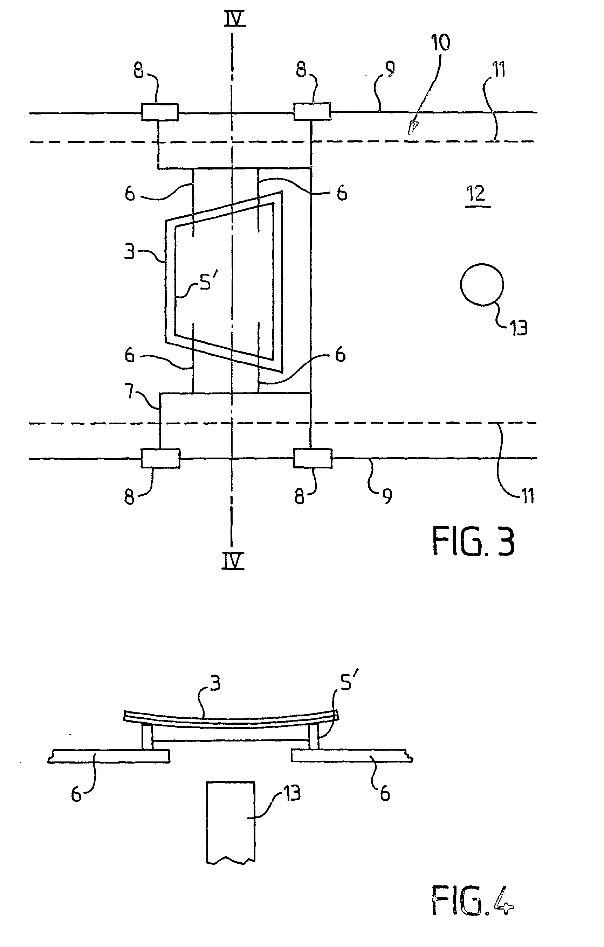

Le mode de réalisation préféré d'amenée des feuilles de verre 3 va maintenant être décrit avec référence aux Figures 3 à 5. Selon ce mode de réalisation, la ou les feuilles 3 sont amenées à la cellule de bombage sur des squelettes 5' qui sont transportés à travers le four de réchauffage et sur lesquels l'effondrement s'effectue progressivement pour pouvoir être très avancé voire terminé ou presque terminé lors de la mise en place dans la cellule de bombage de la feuille 3 dans la position de pressage selon l'invention.

Pour le cas de feuilles de verre superposées, lors du transfert dans la cellule de bombage, et pendant le chauffage des feuilles de verre, les différentes feuilles risquent de se décaler les unes par rapport aux autres. Pour éviter cela, on préfère prévoir des butées verticales reliées aux pattes latérales 6 lesdites butées maintenant les feuilles en bonne position par contact des butées avec leur tranche, ce qui guide leur effondrement.

Le squelette 5' a des dimensions telles que lorsque le verre est placé sur lui, il est à une distance du bord de la ou des feuilles de verre suffisamment grande pour que le verre ne forme pas une cavité trop profonde dès la périphérie de la feuille (effet « baignoire ») alors qu'il est transporté dans le four, mais suffisamment petite pour que l'effet d'effondrement recherché avec la formation d'une flèche principale soit obtenu. Cette mise au point des caractéristiques du squelette 5' d'effondrement en fonction des autres paramètres de l'installation est à la portée de l'homme du métier.

Comme on peut le voir sur les Figures 3 et 4, le squelette 5' sur lequel est posée la feuille 3 est porté par des pattes latérales 6, elles-mêmes portées par un chariot 7 doté de roues 8 se déplaçant sur des rails latéraux 9 du four 10.

Sur la Figure 3, on a désigné par 11, les parois du four, et par 12 l'emplacement de la cellule de bombage à la partie inférieure de laquelle est disposée une colonne verticale 13, déplaçable verticalement, placée au centre du cadre 4 au-dessous de la forme mâle 2 (ces éléments 2 et 4 ne sont pas représentés sur la figure 3), le rôle de la colonne 13 étant décrit plus loin. Le chariot 7 est équipé de roues 8 et de pattes 6 supportant le squelette 5' , Les roues du chariot sont à l'extérieur du four du fait que les axes des roues passent à travers des ouvertures horizontales pratiquées dans les parois 11. Pour limiter les pertes thermiques dues à ces ouvertures, un tissu réfractaire (non représenté) pendu par le haut peut les recouvrir et il s'écarte lorsqu'il est poussé par les axes des roues et se remet tout seul en place après leur passage.

Lorsqu'un squelette 5' portant un vitrage 3 (une ou plusieurs feuilles superposées) qui a subi l'effondrement voulu, arrive dans la cellule de bombage 12 (Figure SA), le chariot 7 qui le porte est arrêté au-dessus du cadre 4 et de la colonne 13, lesquels se trouvent en position basse.

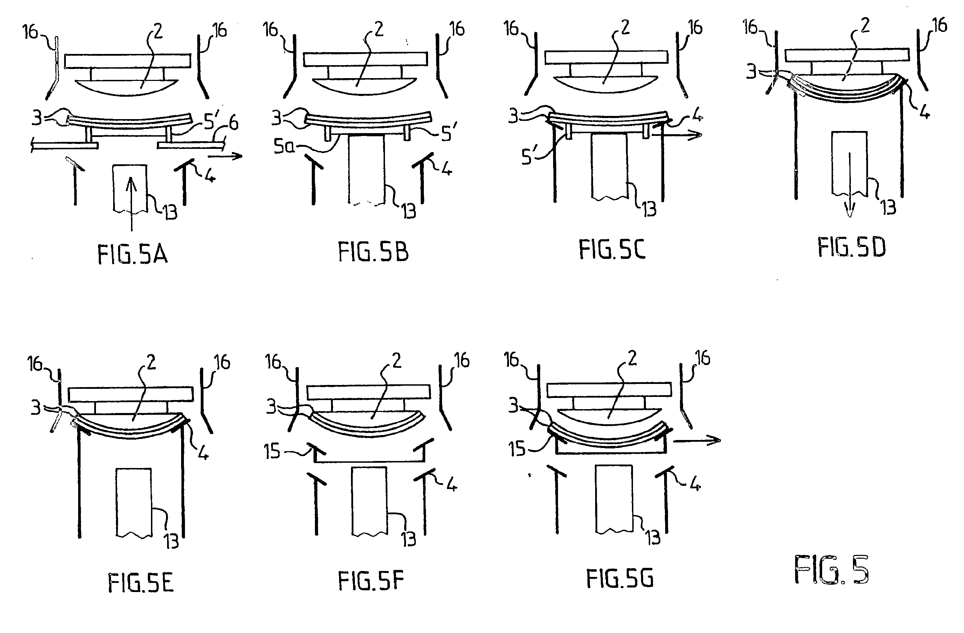

On commande alors la montée de la colonne 13 qui vient supporter le squelette 5' et son vitrage 3 par une plaque de base 5'a dudit squelette 5' et le chariot 7 avance pour être ramené à l'entrée du four 10 (Figure 5B). Lors de la phase d'élévation du squelette 5' par la colonne 13, le recentrage X-Y de celui-ci est réalisé par un système d'indexation en croix pour le placer en exact position par rapport à l'anneau 4.

Le cadre 4 est alors amené à monter pour supporter la feuille 3 à sa périphérie, et le squelette 5' déchargé du verre est descendu par la colonne 13 et évacué par un système de convoyage.

On effectue alors les étapes de pressage et d'aspiration (Figures respectivement 5D et 5E) qui sont analogues aux étapes de pressage et d'aspiration des Figures respectivement 2C et 2D. La figure 6 représente une variante préférée selon laquelle un soufflage est réalisé au travers de la forme mâle 2 vers la partie centrale du verre. Les flêches sur la figure 6 indiquent la direction de déplacement de l'air. Dans ce cas, la forme mâle 2 est munie d'un matériau fibreux 15 perméable à l'air. La forme mâle est munie d'une jupe 16 par laquelle une aspiration peut être exercée afin de retenir le verre en contact avec la forme mâle 2 même lorsque la contreforme 4 est abaissée.

Ensuite, comme précédemment, le cadre 4 est abaissé, la feuille 3 est amenée à rester appliquée contre la forme mâle 2, par des forces d'aspiration, et notamment par l'aspiration au travers d'une jupe 16 dans le cas surtout d'un empilement de feuilles, le temps qu'un support (notamment du type cadre) de récupération ou refroidissement 15 vienne reprendre la feuille bombée 3 (Figures 5F et 5G) .

Le procédé qui vient d'être décrit peut tout aussi bien être réalisé avec une colonne fixe qui ne se déplace pas verticalement alors que ce sont les pattes 6 qui se déplacent vers le bas pour déposer le support d'effondrement 5' sur la colonne.

Dans le cas de l'art antérieur où l'on fabrique des feuilles bombées par seul effondrement sur squelette, le chauffage des feuilles s'élève généralement à 640-660°C. Par ailleurs, on cherche dans ce cas à chauffer davantage la feuille de verre dans sa région centrale afin d'éviter de donner à la feuille la forme d'une « baignoire ». De plus, dans un tel procédé, l'obtention précise d'une forme est très difficile voire impossible, du fait de l'absence de contact avec une forme pleine.

Contrairement à cela, dans le cas du procédé tel que décrit avec référence aux Figures 3 à 5, on peut travailler avantageusement à une température inférieure à 640°C, par exemple à 590°C-640°C et même 590-630°C. En effet, dans le four et jusqu'au pressage (formage mécanique), on n'a besoin que de constituer la concavité principale pour obtenir la flèche f. On n'a par ailleurs pas besoin de chauffer localement davantage la feuille de verre. On effectue donc un chauffage homogène.

Le fait de travailler à une température de bombage plus basse, sans pour autant provoquer la casse du verre, est avantageux à la fois comme étant d'un moindre coût et présentant moins de risques de modifier les qualités (optique, mécanique..) du verre. Egalement, dans le cas où l'on travaille avec un empilement de feuilles de verre séparées par une poudre de séparation (carbonate de calcium, Kieselguhr), ladite poudre présente des risques faibles, sinon nuls, de donner lieu à des piqûres ou défauts optiques, et ce, d'autant qu'il n'est plus nécessaire, avec le procédé de la présente invention, de disposer de la poudre sur toute la surface du verre et qu'il suffit seulement d'en placer à la périphérie. On peut noter que certaines feuilles de verre, en particulier celles destinées à former l'une des feuilles d'un pare-brise, comportent en périphérie sur une face une couche d'émail noir. Cette feuille sera placée dans l'empilement avec sa couche d'émail noir tournée vers l'intérieur, la poudre de séparation étant alors disposée sur l'émail noir. Dans ces conditions, les défauts optiques qui pourraient se présenter du fait de l'utilisation de la poudre se trouveront, en position de montage du pare-brise, totalement cachés à la vue.

Le fait de travailler à une température homogène, n'induisant donc pas de contraintes à l'intérieur du verre, est très utile notamment dans le cas où une feuille d'un empilement comporte, en revêtement sur toute une face de celle-ci, une couche anti-solaire riche en argent. On sait en effet que si de telles couches sont chauffées de manière non homogène, elles peuvent se fissurer.

On peut ainsi mentionner, pour former des pare-brise, des empilements classiques d'une feuille inférieure avec une couche périphérique d'émail tournée vers l'intérieur et une feuille supérieure revêtue entièrement d'une couche anti-solaire tournée également vers l'intérieur. Le bombage de tels empilements avec introduction de la poudre de séparation en périphérie seulement est, avec les moyens de l'invention, effectué dans les meilleures conditions possibles. L'assemblage d'un pare-brise feuilleté avec interposition de la feuille de matière plastique (PVB) sera effectué de façon classique avec les deux feuilles résultant du même bombage, après refroidissement naturel, par exemple à raison de 10°C/seconde.

En outre, contrairement au cas où le bombage a lieu entièrement sur un squelette (refroidissement compris), le refroidissement des feuilles bombées s'effectue, avec la présente invention, dans de meilleures conditions. Dans le premier cas, le squelette est en contact direct avec le verre depuis le début du procédé. Etant métallique, le squelette se refroidit plus vite que le verre, si bien qu'il se forme des contraintes d'extension au sein du verre, avec, comme conséquence, une fragilisation du verre et un taux de rebut non négligeable.

Dans le cas de la présente invention, le cadre de refroidissement (qui pourrait être remplacé par un squelette de refroidissement) n'est introduit qu'après le bombage. Il est de préférence équipé d'un tricot ou d'un feutre isolant le cadre ou le squelette métallique du vitrage et pouvant laisser passer l'air du fait de leur contact partiel avec le verre.

Grâce au procédé selon l'invention, pour une même cadence de production, le nombre d'outils nécessaires est plus faible, ce qui est plus favorable à l'homogénéité des pièces fabriquées. Ainsi, par rapport au bombage sur squelette (refroidissement compris), trois cadres de refroidissement sont nécessaires avec l'invention au lieu de 30 à 40 squelettes.

## Revendications

1. Procédé de bombage simultané de plusieurs feuilles de verre superposées (3) comprenant
**■** une étape d'effondrement par gravité du verre, puis,
**■** une mise en contact de la région centrale desdites feuilles (3) avec une forme mâle (2) par rapprochement de ladite forme mâle d'une contreforme femelle (4) supportant lesdites feuilles, ladite forme mâle (2) étant disposée au-dessus de ladite contreforme femelle (4) avec possibilité de déplacement vertical l'une par rapport à l'autre dans une cellule de bombage (12),
**■** puis une phase de pressage du verre dans sa région périphérique entre la forme mâle (2) et la contreforme femelle (4), puis
**■** une phase d'aspiration du verre au travers de la forme mâle (2), le pressage étant maintenu, ladite aspiration n'étant pas déclenchée avant que la première feuille ne vienne en contact avec la forme mâle, puis
**■** l'arrêt du pressage par écartement de la forme mâle de la contreforme femelle, le verre restant en contact avec la forme mâle sous l'effet d'une force d'aspiration au moins partiellement exercée par une jupe entourant la forme mâle, puis
**■** pendant que le verre est en contact avec la forme mâle sous l'effet de la force d'aspiration, un support de refroidissement est amené sous le verre, puis la force d'aspiration est stoppée de façon à laisser reposer le verre sur ledit support de refroidissement, puis ledit support de refroidissement emmène le verre pour une étape de refroidissement du verre en dehors de la cellule de bombage.

2. Procédé selon la revendication précédente, **caractérisé en ce que** l'effondrement par gravité est principalement cylindrique et **en ce qu'**il conduit essentiellement à une flèche f sensiblement égale à la flèche finale.

3. Procédé selon l'une des revendications précédentes, **caractérisé en ce que** pendant l'aspiration, un soufflage est également exercé au travers de la forme mâle dans une région centrale du verre, ladite forme mâle étant revêtue d'un matériau fibreux.

4. Procédé selon l'une des revendications précédentes, **caractérisé en ce que** l'effondrement est au moins en partie réalisé dans un four tunnel au travers duquel le verre est convoyé en direction de la cellule de bombage, ledit verre étant placé sur un support d'effondrement.

5. Procédé selon l'une des revendications précédentes, **caractérisé en ce que** l'effondrement est au moins en partie réalisé sur un support d'effondrement occupant une surface s'inscrivant entièrement ,vu de dessus, à l'intérieur de la contreforme annulaire, et **en ce que** la contreforme annulaire entraîne le verre en se soulevant en direction de la forme mâle et en passant autour dudit support d'effondrement.

6. Procédé selon l'une des deux revendications précédentes, **caractérisé en ce que** le support d'effondrement est un squelette, éloigné de la tranche du verre d'au moins 2 cm.

7. Procédé selon l'une des revendications précédentes, **caractérisé en ce que** l'on conduit le bombage à une température inférieure à 640°C.

8. Dispositif de bombage pour la mise en oeuvre du procédé tel que défini à l'une des revendications précédentes, comprenant un four (10) à l'intérieur duquel se trouve un dispositif de transport du verre placé sur squelette (5') amenant le squelette à une cellule de bombage (12), ladite cellule comprenant un cadre ou contreforme femelle annulaire (4), le squelette occupant une surface s'inscrivant entièrement vu de dessus, à l'intérieur de la contreforme annulaire, et une forme mâle convexe (2) disposée au-dessus de la contreforme annulaire (4), des moyens étant prévus pour évacuer les squelettes (5') à partir de la cellule de bombage, des moyens étant prévus pour déplacer verticalement d'une part la contreforme annulaire (4), ladite forme mâle étant muni de moyens pouvant exercer une aspiration au travers de sa surface convexe.

9. Dispositif selon la revendication précédente, **caractérisé en ce qu'**une jupe (16) entoure la forme convexe mâle (2) de façon à pouvoir exercer une aspiration extérieurement au vitrage et à proximité de la (des) tranche(s) de la (des) feuille (s) de verre.

10. Application du procédé ou dispositif de l'une des revendications précédentes à la réalisation de vitrages feuilletés présentant localement un critère de non-développabilité supérieur à 2.

## Claims

1. A method of simultaneously bending two or more superposed glass sheets (3) comprising
**■** a step of allowing the glass to sag under gravity; then
**■** placing the central region of said sheets (3) in contact with a male former (2) by advancing a female former (4) supporting said sheets toward said male former, said male former (2) being located above said female former (4) with vertical movement of one with respect to the other being possible in a bending cell (12);
**■** then a phase of pressing the glass in its peripheral region between the male former (2) and the female former (4); then
**■** a phase of applying a partial vacuum to the glass through the male former (2), pressing being continued, application of said partial vacuum not being commenced until the first sheet has made contact with the male former; then
**■** discontinuing the pressing by separating the male former from the female former, the glass remaining in contact with the male former under the effect of a partial vacuum at least partly applied through a skirt surrounding the male former; and then
**■** while the glass is in contact with the male former under the effect of the partial vacuum, a cooling support is brought under the glass, the partial vacuum is then stopped to allow the glass to rest on said cooling support, and said cooling support then takes the glass away for a step in which the glass is cooled outside the bending cell.

2. The method as claimed in the preceding claim, **characterized in that** the gravity-induced sag is mainly cylindrical and **in that** it leads essentially to a deflection f approximately equal to the final deflection.

3. The method as claimed in either of the preceding claims, **characterized in that** during the application of the partial vacuum, positive gas pressure is also applied through the male former in a central region of the glass, said male former being covered with a fibrous material.

4. The method as claimed in one of the preceding claims, **characterized in that** the sag is at least partly brought about in a tunnel oven through which the glass is conveyed toward the bending cell, said glass being placed on a sag support.

5. The method as claimed in one of the preceding claims, **characterized in that** the sag is at least partly brought about on a sag support occupying an area inscribed entirely, seen from above, within the annular female former, and **in that** the annular female former moves the glass by rising toward the male former and passing around said sag support.

6. The method as claimed in either of the two preceding claims, **characterized in that** the sag support is a skeleton set back by at least 2 cm from the narrow edge of the glass.

7. The method as claimed in one of the preceding claims, **characterized in that** the bending is carried out at a temperature of less than 640°C.

8. A bending system for carrying out the method as defined in one of the preceding claims, comprising an oven (10) in which is a system for transporting the skeleton (5')-supported glass that moves the skeleton to a bending cell (12), said cell comprising a frame or annular female former (4), the skeleton occupying an area inscribed entirely, seen from above, within the annular female former, and a convex male former (2) located above the annular female former (4), means being provided for discharging the skeletons (5') from the bending cell, means being provided for moving vertically on the one hand the annular female former (4), and said male former being provided with means capable of applying a partial vacuum through its convex surface.

9. The system as claimed in the preceding claim, **characterized in that** a skirt (16) surrounds the male convex former (2) in such a way that a partial vacuum can be applied around the outside of the glazing near the narrow edge(s) of the glass sheet(s).

10. An application of the method or system of one of the preceding claims to the production of laminated glazing having locally a coefficient of non-developability greater than 2.

## Patentansprüche

1. Verfahren zum gleichzeitigen Biegen mehrerer übereinander liegender Glasscheiben (3), welches:
- eine Stufe des Einsinkenlassens des Glases durch die Schwerkraft,
- ein In-Berührung-Bringen des mittigen Bereichs der Glasscheiben (3) mit einer Patrizenform (2) durch Annäherung dieser Patrizenform an eine matrizenartige Gegenform (4), die diese Glasscheiben trägt, wobei diese Patrizenform (2) über dieser matrizenartigen Gegenform (4) mit der Möglichkeit einer vertikalen Bewegung der einen in Bezug auf die andere in einer Biegezelle (12) angeordnet ist,
- eine Stufe des Pressens des Glases in dessen Umfangsbereich zwischen der Patrizenform (2) und der matrizenartigen Gegenform (4),
- eine Stufe des Ansaugens des Glases durch die Patrizenform (2) hindurch, wobei der Pressvorgang aufrechterhalten wird und die Ansaugung nicht ausgelöst wird, bevor die erste Glasscheibe nicht mit der Patrizenform in Berührung gekommen ist, und anschließend
- das Anhalten des Pressvorgangs durch Entfernen der Patrizenform von der matrizenartigen Gegenform, wobei das Glas in Berührung mit der Patrizenform unter dem Einfluss einer Ansaugkraft bleibt, die wenigstens teilweise von einer die Patrizenform umgebenden Schürze ausgeübt wird, umfasst, wobei anschließend,
- während sich das Glas unter dem Einfluss der Ansaugkraft in Berührung mit der Patrizenform befindet, ein Kühlträger unter das Glas gebracht und anschließend die Ansaugkraft derart beendet wird, dass das Glas auf dem Kühlträger ruhen bleibt, und danach dieser Kühlträger das Glas in eine Stufe der Abkühlung des Glases außerhalb der Biegezelle abtransportiert.

2. Verfahren nach dem vorhergehenden Anspruch, **dadurch gekennzeichnet, dass** das Einsinkenlassen durch die Schwerkraft hauptsächlich ein zylindrisches ist, und **dass** es im Wesentlichen zu einer Durchbiegung f führt, die etwa gleich der fertigen Durchbiegung ist.

3. Verfahren nach einem der vorhergehenden Ansprüche, **dadurch gekennzeichnet, dass** während des Ansaugvorgangs auch ein Blasvorgang durch die Patrizenform hindurch in einem mittigen Bereich des Glases durchgeführt wird, wobei die Patrizenform mit einem Fasermaterial überzogen ist.

4. Verfahren nach einem der vorhergehenden Ansprüche, **dadurch gekennzeichnet, dass** das Einsinkenlassen wenigstens teilweise in einem Tunnelofen durchgeführt wird, durch welchen das Glas in Richtung der Biegezelle transportiert wird, wobei das Glas sich auf einem Vertiefungsträger befindet.

5. Verfahren nach einem der vorhergehenden Ansprüche, **dadurch gekennzeichnet, dass** das Einsinkenlassen wenigstens teilweise auf einem Vertiefungsträger durchgeführt wird, der eine Fläche einnimmt, die vollständig, von oben gesehen, in das Innere der ringförmigen Gegenform einbeschrieben ist, und dass die ringförmige Gegenform das Glas transportiert, indem sie in Richtung der Patrizenform angehoben wird, wobei sie um den Vertiefungsträger herumgeht.

6. Verfahren nach einem der zwei vorhergehenden Ansprüche, **dadurch gekennzeichnet, dass** der Vertiefüngsträger.ein Skelett ist, das vom Rand des Glases mindestens 2 cm entfernt ist.

7. Verfahren nach einem der vorhergehenden Ansprüche, **dadurch gekennzeichnet, dass** der Biegevorgang bei einer Temperatur von unter 640 °C durchgeführt wird.

8. Biegevorrichtung für die Durchführung des in einem der vorhergehenden Ansprüche definierten Verfahrens, welche einen Ofen (10) umfasst, in dessen Inneren sich eine Einrichtung für den Transport des Glases befindet, das auf dem Skelett (5') angeordnet ist, und welche das Skelett in eine Biegezelle (12) bringt, wobei diese Zelle einen Rahmen oder eine ringförmige matrizenartige Gegenform (4), wobei das Skelett eine Fläche einnimmt, die vollständig, von oben gesehen, in das Innere der ringförmigen Gegenform einbeschrieben ist, und eine konvexe Patrizenform (2); die über der ringförmigen Gegenform (4) angeordnet ist, umfasst, wobei Mittel vorgesehen sind, um die Skelette (5') aus der Biegezelle zu entfernen, Mittel vorgesehen sind, um einerseits die ringförmige Gegenform (4) vertikal zu bewegen und die Patrizenform mit Mitteln versehen ist, die durch ihre konvexe Oberfläche hindurch eine Ansaugwirkung ausüben können.

9. Vorrichtung nach dem vorhergehenden Anspruch, **dadurch gekennzeichnet, dass** eine Schürze (16) die konvexe Patrizenform (2) derart umgibt, dass eine Ansaugwirkung außerhalb des Glases und in der Nähe des (der) Randes (Ränder) der Glässcheibe(n), ausgeübt werden kann.

10. Anwendung des Verfahrens oder der Vorrichtung nach einem der vorhergehenden Ansprüche für die Herstellung von Verbundgläsern, die lokal ein Nicht-Abwickelbarkeitskriterium von größer als 2 aufweisen.
